# EUROPEAN PATENT APPLICATION

(11) **EP 4 297 119 A1**
(43) Date of publication of application: **27.12.2023**
(21) Application number: 21926091.6
(22) Date of filing: 18.02.2021
(51) Int. Cl.: H01M 4/13, H01M 10/0525

(54) **ELECTROCHEMICAL DEVICE AND ELECTRONIC DEVICE**

(71) Applicant: Ningde Amperex Technology Limited, Ningde, Fujian 352100 (CN)
(72) Inventor: DU, Changchao, Ningde, Fujian 352100 (CN)
(74) Representative: Icosa
(86) International application number: PCT/CN2021/076725
(87) International publication number: WO 2022/174369

(57) **Abstract**

This application provides an electrochemical apparatus and an electronic apparatus. The electrochemical apparatus includes: a negative electrode, where the negative electrode includes a negative electrode current collector, and a negative electrode active substance layer is provided on a surface of the negative electrode current collector; a positive electrode, where the positive electrode includes a positive electrode current collector, a positive electrode active substance layer is disposed on a surface of the positive electrode current collector, and an insulating layer is disposed on a surface of the positive electrode current collector close to a tab portion; and a separator; where an outer edge of the negative electrode active substance layer is further outward than an outer edge of the positive electrode active substance layer at a facing position; and an inner edge of the insulating layer is in contact with or partially overlaps with the outer edge of the positive electrode active substance layer, and an outer edge of the insulating layer is flush with the outer edge of the negative electrode active substance layer or is further outward than the outer edge of the negative electrode active substance layer. This application is intended to reduce burrs and debris caused by cutting, effectively reduce the impedance in the edge region of the negative electrode, enhance the kinetics of the edge of the negative electrode, alleviate lithium precipitation at the edge of the negative electrode, and reduce the chance of fire or explosion in the electrochemical apparatus.

## Description

### TECHNICAL FIELD

This application relates to an electrochemical apparatus and an electronic apparatus.

### BACKGROUND

Electrochemical apparatuses such as lithium-ion batteries are widely used in electronic products such as communication devices, laptops, and digital cameras and electric vehicles due to their high energy density, zero memory effect, and environmental friendliness. With rapid technological advancements and diverse market demands, higher performance requirements have been placed on electrochemical apparatuses, including safety performance.

There are many factors that can affect the safety performance of lithium-ion batteries. For example, in the process of preparing wound-type lithium-ion batteries, as the frequency of use of die for cutting electrode plates increases, the risk of burrs and debris at the edge of the electrode plate also increases. If the electrode plates have burrs or debris produced during the cutting, the burrs or debris may penetrate the separator and cause a short circuit, resulting in safety risks. For another example, lithium precipitation occurred in the battery may increase the chance of the battery catching fire or exploding, which in turn causes a safety risk.

### SUMMARY

In some embodiments, this application provides an electrochemical apparatus including: a negative electrode, where the negative electrode includes a negative electrode current collector, and a negative electrode active substance layer is provided on a surface of the negative electrode current collector; a positive electrode, where the positive electrode includes a positive electrode current collector, a positive electrode active substance layer is disposed on at least one surface of the positive electrode current collector, and an insulating layer is disposed on at least one surface of the positive electrode current collector close to a tab portion; and a separator, where the separator is disposed between the negative electrode and the positive electrode, and the positive electrode active substance layer and the negative electrode active substance layer face each other across the separator; where an outer edge of the negative electrode active substance layer extends further outward than an outer edge of the positive electrode active substance layer at an opposite position; and an inner edge of the insulating layer is in contact with or partially overlaps with the outer edge of the positive electrode active substance layer, and an outer edge of the insulating layer is flush with the outer edge of the negative electrode active substance layer or extends further outward than the outer edge of the negative electrode active substance layer.

In some embodiments, the tab portion protrudes from the positive electrode current collector.

In some embodiments, the insulating layer is provided on a surface of the positive electrode current collector far away from the tab portion.

In some embodiments, a width A of a portion of the outer edge of the insulating layer that extends beyond the outer edge of the negative electrode active substance layer satisfies A ≤ 3 mm.

In some embodiments, a width A' of the insulating layer satisfies 0.2 mm ≤ A' ≤ 10 mm.

In some embodiments, a width B of a portion of the outer edge of the negative electrode active substance layer that extends beyond the outer edge of the positive electrode active substance layer satisfies 0.2 mm ≤ B ≤ 5 mm.

In some embodiments, a thickness Tᵢ of the insulating layer and a thickness Tₚ of the positive electrode active substance layer satisfy 0 µm ≤ Tₚ - Tᵢ ≤ 10 µm.

In some embodiments, a thickness Tᵢ of the insulating layer satisfies 10 µm ≤ Tᵢ ≤ Tₚ.

In some embodiments, the insulating layer includes an inorganic material and a binder, where the inorganic material includes at least one of barium sulfate, calcium silicate, aluminum oxide, boehmite, magnesium hydroxide, aluminum hydroxide, silicon dioxide, magnesium oxide, or calcium orthosilicate, and the binder includes at least one of polyvinylidene fluoride, polyurethane, polyacrylate, styrene-butadiene rubber, polyetherimide, carboxymethyl cellulose sodium, or acrylate.

In some embodiments, based on a total weight of the insulating layer, a weight percentage of the inorganic material ranges from 60% to 93%, and a weight percentage of the binder ranges from 7% to 40%.

In some embodiments, impedance of the insulating layer is greater than or equal to 1 KΩ.

This application further provides an electronic apparatus, where the electronic apparatus includes the foregoing electrochemical apparatus of this application. The technical solution of this application has at least the following beneficial effects: The insulating layer provided in the electrochemical apparatus of this application can reduce burrs and debris caused by cutting, provide support for the edge region of the negative electrode active substance layer, enable a tighter bond between the edge region of the negative electrode active substance layer and the separator, reduce the impedance in the edge region of the negative electrode, enhance the kinetics of the edge of the negative electrode, alleviate lithium precipitation at the edge of the negative electrode, reduce the chance of fire or explosion in the electrochemical apparatus, and improve the safety performance of the electrochemical apparatus.

### BRIEF DESCRIPTION OF DRAWINGS

FIG. 1A is a part of a cross-sectional view of an electrode body according to an embodiment of this application, FIG. 1B is an exploded view of FIG. 1A, and FIG. 1C is a schematic view of a portion of the electrode body of this embodiment as viewed from a positive electrode side;
FIG. 2A is a part of a cross-sectional view of an electrode body according to another embodiment of this application, FIG. 2B is an exploded view of FIG. 2A, and FIG. 2C is a schematic view of a portion of the electrode body of this embodiment as viewed from a positive electrode side;
FIG. 3A is a part of a cross-sectional view of an electrode body according to another embodiment of this application, FIG. 3B is an exploded view of FIG. 3A, and FIG. 3C is a schematic view of a portion of the electrode body of this embodiment as viewed from a positive electrode side;
FIG. 4A is a part of a cross-sectional view of an electrode body according to another embodiment of this application, FIG. 4B is an exploded view of FIG. 4A, and FIG. 4C is a schematic view of a portion of the electrode body of this embodiment as viewed from a positive electrode side; and
FIG. 5A is a part of a cross-sectional view of an electrode body according to another embodiment of this application, FIG. 5B is an exploded view of FIG. 5A, and FIG. 5C is a schematic view of a portion of the electrode body of this embodiment as viewed from a positive electrode side.

Reference signs are as follows: positive electrode 10, positive electrode current collector 11, positive electrode active substance layer 12, outer edge 12a of positive electrode active substance layer, insulating layer 13, outer edge 13a of insulating layer, inner edge 13b of insulating layer, overlapping portion 14 of positive electrode active substance layer and insulating layer, negative electrode 20, negative electrode current collector 21, negative electrode active substance layer 22, outer edge 22a of negative electrode active substance layer, separator 30, and tab portion 40.

### DESCRIPTION OF EMBODIMENTS

It should be understood that the disclosed embodiments are merely examples of this application. This application may be implemented in various forms. Therefore, specific details disclosed herein should not be interpreted as any limitation, and shall be used merely as a basis for the claims and serve as an illustrative basis to instruct persons skilled in the art to implement this application in various manners.

In the descriptions of this application, it should be noted that orientations or positional relationships indicated by the terms "length", "width", "thickness", "inside", "outside" and the like is an orientation or positional relationship shown in the accompanying drawings, and are merely for the convenience of describing this application and simplifying the description, rather than indicating or implying that the devices or elements must have a particular orientation, and constructed and operated in the particular orientation. Thus, it cannot be construed as a limitation to this application.

### (Electrochemical apparatus)

The electrochemical apparatus of this application is, for example, a primary battery, a secondary battery, a fuel cell, a solar cell, or a capacitor. The secondary battery is, for example, a lithium secondary battery, and the lithium secondary battery includes but is not limited to a lithium metal secondary battery, a lithium-ion secondary battery, a lithium polymer secondary battery, or a lithium-ion polymer secondary battery.

In some embodiments, the electrochemical apparatus includes a negative electrode, a positive electrode, and a separator.

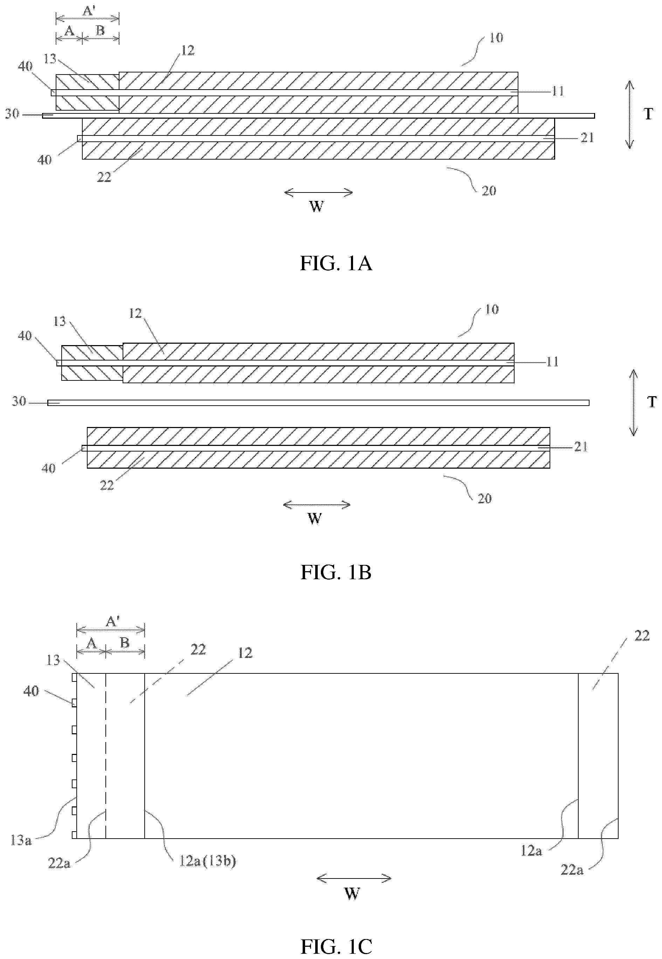

Refer to FIG. 1A to FIG. 5C. The negative electrode 20 includes a negative electrode current collector 21, and a negative electrode active substance layer 22 is provided on at least one surface of the negative electrode current collector 21. The positive electrode 10 includes a positive electrode current collector 11, and a positive electrode active substance layer 12 is provided on at least one surface of the positive electrode current collector 11. The separator 30 is disposed between the negative electrode 20 and the positive electrode 10, and the positive electrode active substance layer 12 and the negative electrode active substance layer 22 face each other across the separator 30. An outer edge 22a of the negative electrode active substance layer extends further outward than an outer edge 12a of the positive electrode active substance layer at an opposite position.

To describe the various orientations clearly, FIG. 1A to FIG. 5C show a width direction (indicated by W in the figures) and a thickness direction (indicated by T in the figures). The width direction is relative to a length direction. In a case that a wound-type battery with a strip-shaped positive electrode is used as an example, an extension direction of the long side of the rectangular positive electrode current collector is regarded as the length direction, and the width direction is perpendicular to the length direction. As shown in FIG. 1A to FIG. 5C, for the two ends in the width direction, the edge of the positive electrode active substance layer 12 close to an edge of the positive electrode current collector is the outer edge 12a of the positive electrode active substance layer, and the edge of the negative electrode active substance layer 22 close to an edge of the negative electrode current collector is the outer edge 22a of the negative electrode active substance layer.

To prevent short circuits in the battery and ensure that lithium ions deintercalated from the positive electrode active substance layer 12 are fully received by the negative electrode active substance layer 22, so as to avoid the safety risk of lithium precipitation in a portion of the positive electrode active substance layer 12 beyond the negative electrode active substance layer 22, a width of the negative electrode active substance layer 22 is designed to be greater than a width of the positive electrode active substance layer 12, resulting in an overhang region on the negative electrode, as manifested in this application by designing the outer edge 22a of the negative electrode active substance layer to be further outward than the outer edge 12a of the positive electrode active substance layer at an opposite position. In some embodiments, a width B of a portion of the outer edge 22a of the negative electrode active substance layer that extends beyond the outer edge 12a of the positive electrode active substance layer satisfies 0.2 mm ≤ B ≤ 5 mm. In some embodiments, a width B of a portion of the outer edge 22a of the negative electrode active substance layer that extends beyond the outer edge 12a of the positive electrode active substance layer satisfies 0.5 mm ≤ B ≤ 5 mm. In some embodiments, a width B of a portion of the outer edge 22a of the negative electrode active substance layer that extends beyond the outer edge 12a of the positive electrode active substance layer satisfies 0.8 mm ≤ B ≤ 2 mm.

However, the inventor has found that when the width of the negative electrode active substance layer 22 is greater than that of the positive electrode active substance layer 12, impedance near the outer edge 12a of the positive electrode active substance layer corresponding to the outer edge 22a of the negative electrode active substance layer is relatively high, which reduces the kinetics of the edge region of the negative electrode, is prone to lithium precipitation, and poses a safety risk. Lowering the impedance generated during the charging of the negative electrode by reducing the charging rate can avoid lithium precipitation at the edge of the negative electrode, but reducing the charging rate prolongs the charging time, which greatly reduces the customer experience and product competitiveness. Increasing the dynamic behavior of the negative electrode active material. Enhancing the kinetics of a negative electrode active material, increasing the proportion of the negative electrode active material, and enhancing the kinetics of the edge region of the negative electrode by using CMC-Li (carboxymethyl cellulose lithium) instead of CMC-Na (carboxymethyl cellulose sodium) or using binders with better kinetics, such as using styrene-based binders instead of styrene-butadiene rubber binders, has certain effects, but the improvement of kinetics through these methods has developed to a bottleneck period, and it is difficult to improve the kinetics of the negative electrode on the existing basis.

In this application, providing the insulating layer 13 on the positive electrode current collector 11 and determining a position and size relationship among the insulating layer 13, the positive electrode active substance layer 12, and the negative electrode active substance layer 22 can reduce the impedance in the edge region of the negative electrode, enhance the kinetics of the edge of the negative electrode, alleviate lithium precipitation at the edge of the negative electrode, and reduce the chance of fire or explosion in the electrochemical apparatus.

The insulating layer 13 may be provided only on a surface of the positive electrode current collector 11 close to the tab portion 40, or may be provided on both a surface of the positive electrode current collector 11 close to the tab portion 40 and a surface of the positive electrode current collector 11 far away from the tab portion 40.

In this application, the tab portion 40 refers to an empty foil region at the edge of the current collector reserved in coating the electrode plate. In some embodiments, the tab portion 40 protrudes from the current collector. After rolling and slitting, the empty foil region at the edge of the current collector can be cut to form tabs before winding.

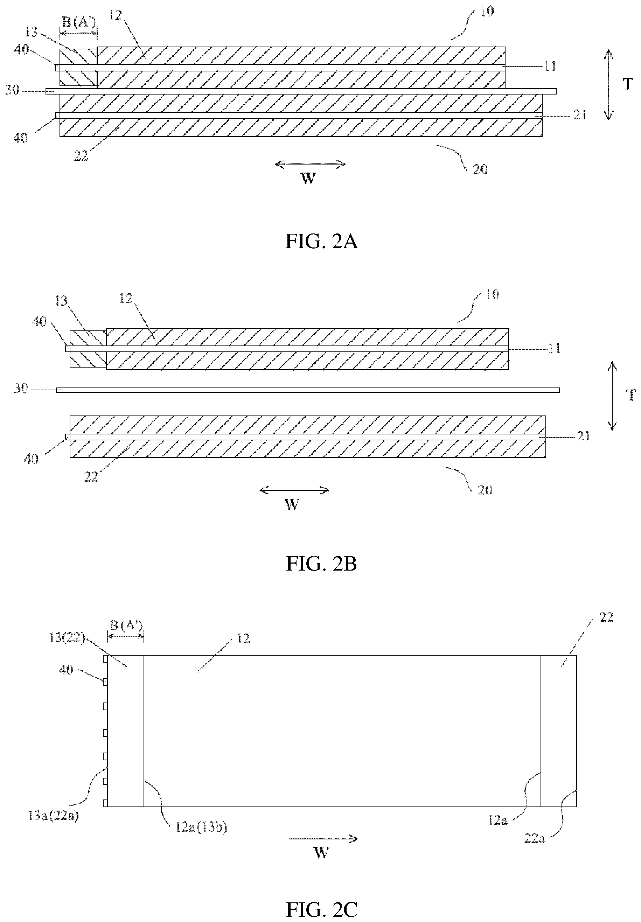

In some embodiments, as a portion of the electrode body shown in FIG. 1A to FIG. 1C, an insulating layer 13 is provided on a surface of the positive electrode current collector 11 close to the tab portion 40, an inner edge 13b of the insulating layer is in contact with the outer edge 12a of the positive electrode active substance layer, and an outer edge 13a of the insulating layer extends further outward than the outer edge 22a of the negative electrode active substance layer. In some embodiments, as a portion of the electrode body shown in FIG. 2A to FIG. 2C, an insulating layer 13 is provided on a surface of the positive electrode current collector 11 close to the tab portion 40, an inner edge 13b of the insulating layer is in contact with the outer edge 12a of the positive electrode active substance layer, and an outer edge 13a of the insulating layer is flush with the outer edge 22a of the negative electrode active substance layer.

In this case, the insulating layer 13 has been provided on the surface of the positive electrode current collector 11 close to the tab portion 40, when the electrode plate provided with the insulating layer 13 is cut, the burrs and debris generated during cutting can be effectively reduced, improving the safety performance of the electrochemical apparatus. In addition, on the end close to the tab portion 13, the insulating layer 13 has been provided on the positive electrode 10, the inner edge 13b of the insulating layer is in contact with the outer edge 12a of the positive electrode active substance layer, and the outer edge 13a of the insulating layer extends further outward than the outer edge 22a of the negative electrode active substance layer, or the outer edge 13a of the insulating layer is flush with the outer edge 22a of the negative electrode active substance layer. Therefore, during the formation of the battery under pressure, the insulating layer 13 on the positive electrode at this end can provide support for the edge region of the negative electrode active substance layer, such that the edge region of the negative electrode active substance layer and the separator can be more tightly bonded, thereby reducing the impedance in the edge region of the negative electrode, and enhancing the kinetics of the edge region of the negative electrode. If the outer edge 13a of the insulating layer extends further inward than the outer edge 22a of the negative electrode active substance layer, the portion of the negative electrode active substance layer 22 that extends beyond the insulating layer is in a suspended state. During the formation of the battery under pressure, the bond between this extended portion and the separator is not tight enough, resulting in a large electron transmission distance and high impedance, and making lithium more easily precipitated.

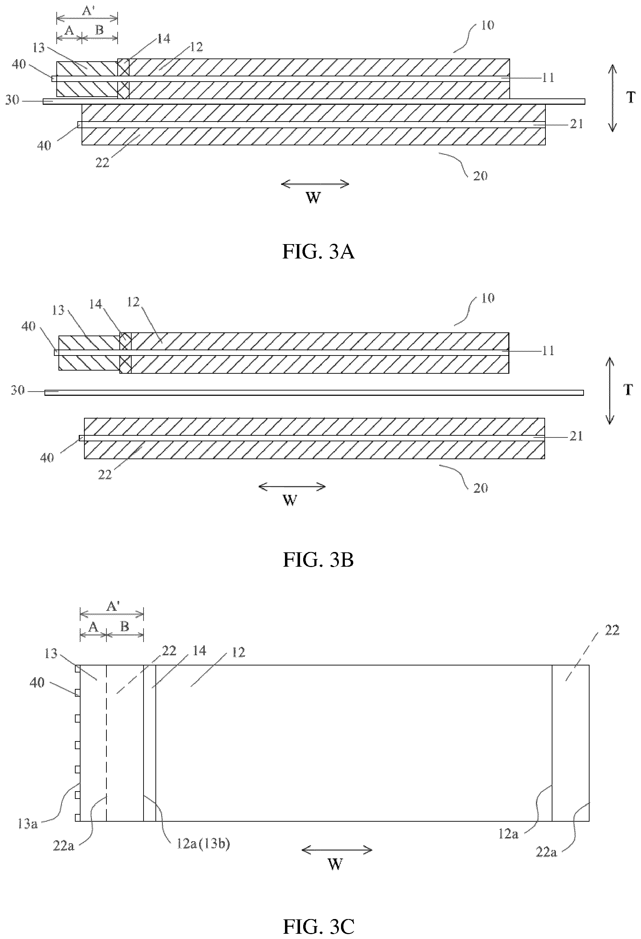

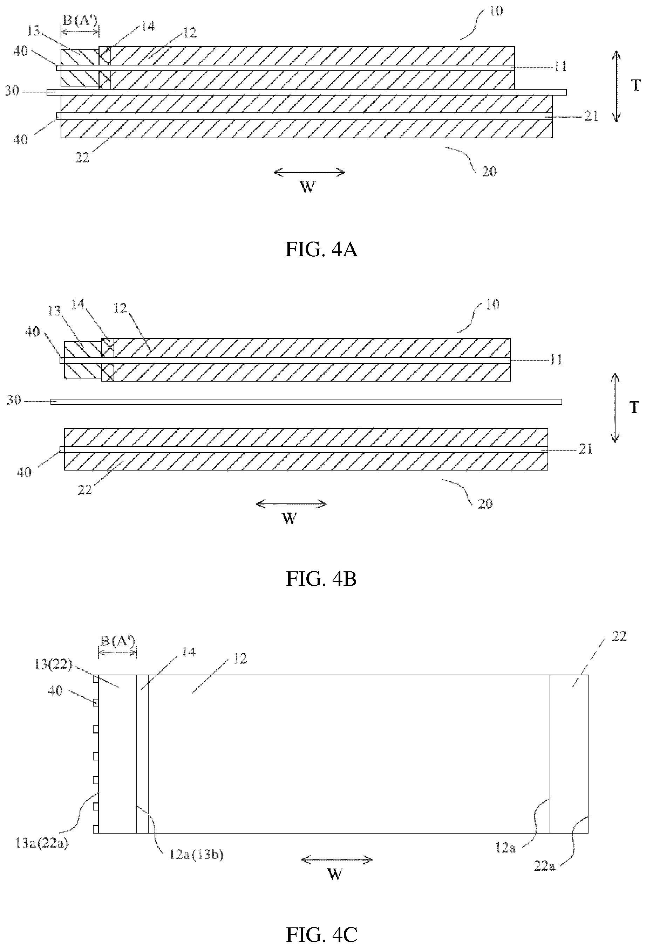

During the application of slurry, when an insulating layer 13 slurry and a positive electrode active substance layer 12 slurry are applied on a surface of the positive electrode current collector 11, the insulating layer slurry is applied along the edge of the positive electrode active substance layer slurry, and the insulating layer slurry and the positive electrode active substance layer slurry may partially overlap to form an overlapping region 14 of the positive electrode active substance layer 12 and the insulating layer 13. In some embodiments, as a portion of the electrode body shown in FIG. 3A to FIG. 3C, an insulating layer 13 is provided on a surface of the positive electrode current collector 11 close to the tab portion 40, an inner edge 13b of the insulating layer partially overlaps with the outer edge 12a of the positive electrode active substance layer, and an outer edge 13a of the insulating layer extends further outward than the outer edge 22a of the negative electrode active substance layer. In some embodiments, as a portion of the electrode body shown in FIG. 4A to FIG. 4C, an insulating layer 13 is provided on a surface of the positive electrode current collector 11 close to the tab portion 40, an inner edge 13b of the insulating layer partially overlaps with the outer edge 12a of the positive electrode active substance layer, and an outer edge 13a of the insulating layer is flush with the outer edge 22a of the negative electrode active substance layer.

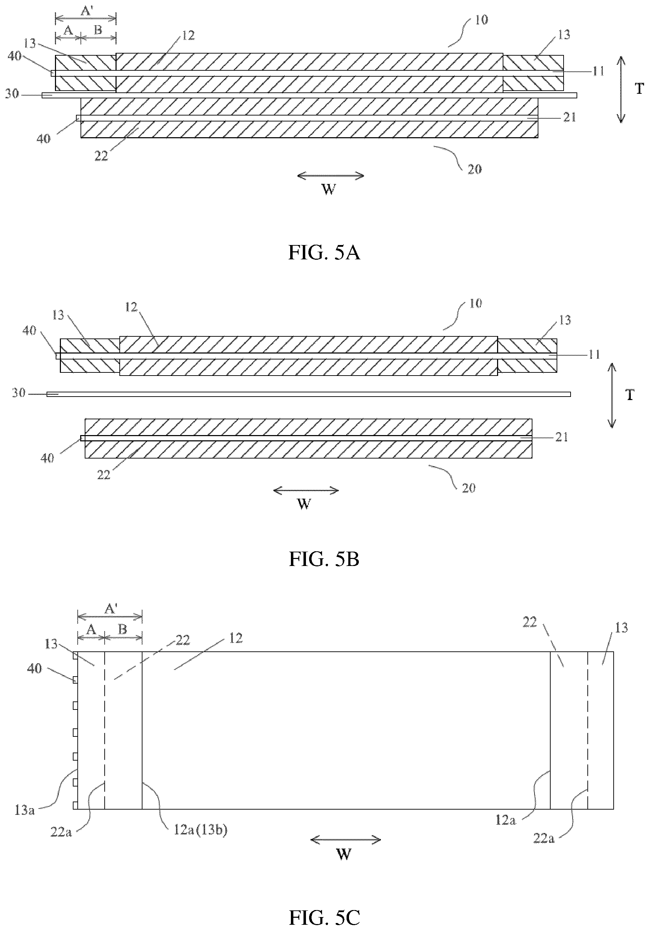

In some embodiments, as a portion of the electrode body shown in FIG. 5A to FIG. 5C, an insulating layer 13 is provided on both a surface of the positive electrode current collector 11 close to the tab portion 40 and a surface of the positive electrode current collector 11 far away from the tab portion 40, an inner edge 13b of the insulating layer is in contact with the outer edge 12a of the positive electrode active substance layer, and an outer edge 13a of the insulating layer extends further outward than the outer edge 22a of the negative electrode active substance layer.

When the insulating layer 13 is provided on both the surface of the positive electrode current collector 11 close to the tab portion 40 and the surface of the positive electrode current collector 11 far away from the tab portion 40, the inner edge 13b of the insulating layer may alternatively partially overlap with the outer edge 12a of the positive electrode active substance layer, and the outer edge 13a of the insulating layer may alternatively be flush with the outer edge 22a of the negative electrode active substance layer. Specifically, it is similar to the solution that the insulating layer 12 is disposed on only the surface of the positive electrode collector 11 close to the tab portion 40, and details are not repeated herein.

In this case, the insulating layer 13 is also provided on the surface of the positive electrode current collector 11 far away from the tab portion 40, so a total width of the positive electrode active substance layer 12 and the insulating layer 13 becomes larger than the width of the negative electrode active substance layer 22. Therefore, during the formation of the battery under pressure, the overhang region of the negative electrode can be supported by the insulating layer, allowing for a further tight bind between the edge region of the negative electrode active substance layer and the separator.

In some embodiments, the insulating layer includes an inorganic material. In this application, the inorganic material can be a conventional inorganic material commonly used in the art. In some embodiments, the inorganic material includes at least one of barium sulfate (BaSO₄), calcium silicate (CaSiO₃), aluminum oxide (Al₂O₃), boehmite, magnesium hydroxide, aluminum hydroxide, silicon dioxide, magnesium oxide, or calcium orthosilicate (CaSiO₄). In some embodiments, based on a total weight of the insulating layer, a weight percentage of the inorganic material ranges from 60% to 93%. In some embodiments, based on the total weight of the insulating layer, a weight percentage of the inorganic material ranges from 80% to 93%.

In some embodiments, the insulating layer further includes a binder. The binder includes at least one of polyvinylidene fluoride, polyurethane, polyacrylate, styrene-butadiene rubber, polyetherimide, carboxymethyl cellulose sodium, or acrylate. In some embodiments, based on a total weight of the insulating layer, a weight percentage of the binder ranges from 7% to 40%.

In some embodiments, impedance of the insulating layer is greater than or equal to 1 kQ, which can prevent the burrs generated during cutting the positive electrode current collector and the insulating layer from having electron transmission occurred, thereby separating the burrs on the positive electrode current collector from the separator. The impedance of the insulating layer can be tested using an internal resistance meter as follows: cleaning the contact heads of the internal resistance meter with lint-free paper dipped in alcohol; turning on the power of the test fixture and adjusting the pressure of the contact head to 0.5 MPa; placing the electrode plate under test on the lower contact head, starting the equipment, and pressing the upper contact head onto the electrode for 3 to 5 seconds; and recording the resistance value of the electrode plate, which represents the impedance of the insulating layer.

In some embodiments, as shown in FIG. 1A to FIG. 5C, a width A of a portion of the outer edge 13a of the insulating layer that extends beyond the outer edge 22a of the negative electrode active substance layer satisfies A ≤ 3 mm. If the width A of the portion of the outer edge 13a of the insulating layer that extends beyond the outer edge of the negative electrode active substance layer is too large, the width of the separator requires to be correspondingly increased, resulting in a loss of energy density of the electrochemical apparatus. Furthermore, even if A is greater than 3 mm, there is no significant further improvement effect or only a weak improvement effect on lithium precipitation at the edge of the negative electrode. In some embodiments, the width A of a portion of the outer edge 13a of the insulating layer that extends beyond the outer edge 22a of the negative electrode active substance layer satisfies 1.5 mm ≤ A ≤ 3 mm.

In some embodiments, as shown in FIG. 1A to FIG. 5C, a width A' of the insulating layer 13 satisfies 0.2 mm ≤ A' ≤ 10 mm. In this application, the width of the insulating layer is a width of the insulating layer on the side of the positive electrode active substance layer, to be specific, a width of the portion of which the outer edge of the insulating layer extends beyond the outer edge of the positive electrode active substance layer. If the width A' of the insulating layer is too large, the width of the separator requires to be correspondingly increased, resulting in a loss of energy density of the electrochemical apparatus. Furthermore, even if A' is greater than 10 mm, there is no significant further improvement effect or only a weak improvement effect on lithium precipitation at the edge of the negative electrode. If the width A' of the insulating layer is too small, it would not effectively reduce the burrs and debris generated during cutting, affecting the improvement in safety performance. In some embodiments, the width A' of the insulating layer 13 satisfies 1 mm ≤ A' ≤ 5 mm. In some embodiments, the width A' of the insulating layer 13 satisfies 3 mm ≤ A' ≤ 5 mm.

In some embodiments of this application, the total width of the positive electrode active substance layer 12 and the insulating layer 13 does not exceed the width of the separator 30, to minimize the impact on the battery width and avoid a loss in energy density of the electrochemical apparatus.

The thickness of the insulating layer affects its support effect on the edge region of the negative electrode active substance layer. In some embodiments, a thickness Tᵢ of the insulating layer and a thickness Tₚ of the positive electrode active substance layer satisfy 0 µm ≤ Tₚ - Tᵢ ≤ 10 µm. If the thickness of the insulating layer relative to the thickness of the positive electrode active substance layer is too small, the support effect of the insulating layer on the edge region of the negative electrode active substance layer is weakened, affecting the improvement effect on lithium precipitation at the edge of the negative electrode. If the thickness of the insulating layer is greater than the thickness of the positive electrode active substance layer, it would be difficult to achieve the desired compacted density during cold pressing, which in turn affects the energy density of the electrochemical apparatus. In some embodiments, a thickness Tᵢ of the insulating layer and a thickness Tₚ of the positive electrode active substance layer satisfy 0 µm ≤ Tₚ - Tᵢ ≤ 2 µm.

In some embodiments, a thickness Tᵢ of the insulating layer satisfies 10 µm ≤ Tᵢ ≤ Tₚ.

It should be noted that in this application, the thickness Tᵢ of the insulating layer is a thickness of the insulating layer on a single surface of the positive electrode current collector, and the thickness Tₚ of the positive electrode active substance layer is a thickness of the positive electrode active substance layer on a single surface of the positive electrode current collector.

In some embodiments, the negative electrode current collector includes a metal, for example, but is not limited to copper foil, nickel foil, stainless steel foil, titanium foil, nickel foam, copper foam, a polymer base coated with conductive metal, or a combination thereof.

The negative electrode active substance layer includes a negative electrode active material. The negative electrode active material can be selected from any material capable of intercalating and deintercalating active ions or doping and dedoping active ions that is suitable for use in an electrochemical apparatus. In some embodiments, the negative electrode active material includes at least one of a carbon material, a metal alloy, a lithium-containing oxide, or a silicon-containing material. The preparation method of the negative electrode can be any method suitable for preparing a negative electrode for an electrochemical apparatus. In some embodiments, in the preparation of negative electrode slurry, a solvent is typically added. The negative electrode active material is added with a negative electrode binder, and as needed, a conductive material and a thickener are added and then dissolved or dispersed in the solvent to form the negative electrode slurry. The solvent is evaporated and removed during the drying. The solvent is a solvent that can be used for the negative electrode active substance layer, for example, but not limited to, an aqueous solution. The thickener is a thickener that can be used for the negative electrode active substance layer, for example, but not limited to, carboxymethyl cellulose sodium (CMC for short). This application does not particularly impose any limitation on the mixing ratio of the negative electrode active material, negative electrode binder, and thickener in the negative electrode active substance layer, and the mixing ratio can be controlled based on the desired performance of the electrochemical apparatus.

In some embodiments, the positive electrode current collector includes a metal, for example, but not limited to, copper foil, and aluminum foil.

The positive electrode active substance layer includes a positive electrode active material. The positive electrode active material can be selected from any material capable of reversibly intercalating and deintercalating active ions that is suitable for use in an electrochemical apparatus. In some embodiments, the positive electrode active material includes at least one of LiCoO₂, LiNiO₂, LiMn₂O₄, LiCo_{1-y}M_{y}O₂, LiNi_{1-y}M_{y}O₂, LiMn_{2-y}M_{y}O₄, or LiNiₓCo_{y}Mn_{z}M_{1-x-y-z}O₂, where M is selected from one or more of Fe, Co, Ni, Mn, Mg, Cu, Zn, Al, Sn, B, Ga, Cr, Sr, V, and Ti, and 0 ≤ y < 1, 0 ≤ x ≤ 1, 0 ≤ z ≤ 1, x + y + z ≤ 1. The preparation method of the positive electrode can be any method suitable for preparing a positive electrode for an electrochemical apparatus. In some embodiments, in the preparation of positive electrode slurry, a solvent is typically added. The positive electrode active material is added with a positive electrode binder, and as needed, a conductive agent and a thickener are added and then dissolved or dispersed in the solvent to form the positive electrode slurry. The solvent is evaporated and removed during the drying. The solvent is a solvent that can be used for the positive electrode active material layer, for example, but not limited to, N-methyl-2-pyrrolidone (NMP). The binder is a binder that can be used for the positive electrode active material layer, for example, but not limited to, polyvinylidene fluoride (PVDF). The conductive agent is a conductive agent that can be used for the positive electrode active material layer, for example, but not limited to, Super P. This application does not particularly impose any limitation on the mixing ratio of the positive electrode active material, positive electrode binder, and positive electrode conductive agent in the positive electrode active substance, and the mixing ratio can be controlled based on the desired performance of the electrochemical apparatus.

The separator is a separator that can be used in an electrochemical apparatus. This application does not particularly impose any limitation on the material and shape of the separator.

The electrochemical apparatus further includes an electrolyte. The electrolyte is an electrolyte that can be used for an electrochemical apparatus in the art. In some embodiments, the electrolyte includes an organic solvent, an electrolytic salt, and an additive. In some embodiments, the electrolytic salt is selected from a lithium salt. In some embodiments, the lithium salt is selected from LiPF₆.

In some embodiments, the electrochemical apparatus further includes an outer packaging shell. The outer packaging shell is an outer packaging shell that can be used for an electrochemical apparatus in the art and be stable to the electrolyte used, for example, but not limited to, a metallic outer packaging shell.

In some embodiments, the tab portion includes multiple positive electrode tabs and multiple negative electrode tabs. The multiple tabs can increase the electronic pathways during charge and discharge of the electrochemical apparatus, reduce polarization, and dissipate heat from the cell. In some embodiments, the number of positive electrode tabs and the number of negative electrode tabs are each equal to the number of cell layers, or the number of positive electrode tabs and the number of negative electrode tabs are each equal to 1/2 of the number of cell layers. The positive electrode tabs and the negative electrode tabs overlap after the cell is wound and are separately welded to nickel-aluminum metal sheets.

### (Electronic apparatus)

The electronic apparatus of this application may be any electronic apparatus, for example, but is not limited to, notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, and lithium-ion capacitors. It should be noted that the electrochemical apparatus of this application is not only applicable to the electronic apparatus listed above but also applicable to energy storage power stations, marine vehicles, and air vehicles. The air vehicles include airborne vehicles inside the atmosphere and airborne vehicles outside the atmosphere.

In some embodiments, the electronic apparatus includes the electrochemical apparatus described above in this application.

This application is further described with reference to Examples. It should be understood that these examples are merely used to describe this application but not to limit the scope of this application. In the following specific examples of this application, only an example in which the battery is a lithium-ion battery is shown, but this application is not limited thereto. In the following examples and comparative examples, all reagents, materials, and instruments used are commercially available or synthesized unless otherwise specified.

### Example 1

Step S1: Positive electrode active material lithium cobalt oxide, conductive agent Super P, and binder PVDF were mixed at a weight ratio of 98:1:1 in a proper amount of NMP to obtain a well-mixed positive electrode slurry. Inorganic material BaSO₄ and the binder PVDF were mixed at a weight ratio of 93:7 in a proper amount of NMP to obtain a well-mixed insulating slurry.

Step S2: The prepared positive electrode slurry was applied on one side of a positive electrode current collector aluminum foil using a coating machine, with a coating thickness of 30 µm. The insulating slurry was applied along the edge of the positive electrode slurry on a side of the positive electrode slurry close to the tab portion, with a coating width of 3.5 mm and a coating thickness of 30 µm. After drying, the same process was repeated to apply the positive electrode slurry on the other side of the positive electrode current collector aluminum foil, followed by drying and cold pressing to obtain a positive electrode.

Step S3: Negative electrode active material graphite, binder styrene-butadiene rubber, thickener carboxymethyl cellulose lithium were fully stirred and mixed at a weight ratio of 97.5:1.3:1.2 in a proper amount of deionized water to obtain a well-mixed negative electrode slurry. The negative electrode slurry was applied on one side of a negative electrode current collector copper foil using a coating machine. After drying, the same process was repeated to apply the negative electrode slurry on the other side of the negative electrode current collector copper foil, followed by drying and cold pressing to obtain a negative electrode.

Step S4: A porous polyethylene PE film is used as the separator. The separator was placed between the negative electrode and the positive electrode, and the positive electrode active substance layer and negative electrode active substance layer face each other across the separator. The outer edge of the negative electrode active substance layer extended 2 mm beyond the outer edge of the positive electrode active substance layer, and the outer edge of the insulating layer extended 1.5 mm beyond the outer edge of the negative electrode active substance layer.

Step S5: The stacked separator, negative electrode, and positive electrode were wound to form an electrode assembly. The electrode assembly was then encapsulated, and the electrolyte was injected in the encapsulation for sufficient impregnation. After that, the electrode assembly undergone formation and aging steps to obtain a lithium-ion battery.

### Examples 2 to 21

The preparation methods in Examples 2 to 21 were the same as that in Example 1, except that the parameters of the insulating layer, positive electrode active substance layer, and negative electrode active substance layer were adjusted.

### Example 22

The preparation method in Example 22 was the same as that in Example 1, except that the insulating slurry was coated on both sides of the positive electrode slurry (one side close to the tab portion and the other side far away from the tab portion), with the coating width of the insulating slurry on each side of 8 mm, and that the parameters of the insulating layer, positive electrode active substance layer, and negative electrode active substance layer were adjusted in Example 22.

### Example 23

The preparation method in Example 23 was the same as that in Example 22, except that the parameters of the insulating layer, positive electrode active substance layer, and negative electrode active substance layer were adjusted.

### Example 24

The preparation method in Example 24 was the same as that in Example 5, except that the parameters of the insulating layer, positive electrode active substance layer, and negative electrode active substance layer were adjusted.

### Comparative Examples 1 and 2

The preparation methods in Comparative Examples 1 and 2 were the same as that in Example 1, except that the parameters of the insulating layer, positive electrode active substance layer, and negative electrode active substance layer were adjusted. In Comparative Examples 1 and 2, the outer edge of the negative electrode active substance layer was further outward than the outer edge of the insulating layer.

Related parameters of Examples 1 to 24 and Comparative Examples 1 and 2 are shown in Table 1.

### Test for performance of lithium-ion battery:

### Hotbox (Hotbox) test:

(1) At 20±5°C, discharged the battery at 0.5C to 3.0 V, and left it standing for 5 min;
(2) Charged the battery at 0.5C to 4.45 V, and charged at constant voltage to 0.05C (4.45 V system);
(3) Left standing at 20±5°C for 60 min;
(4) Heated at a rate of 5°C/min ±2°C/min to 130°C±2°C and maintained this temperature for 60 min;
(5) After the test, checked the appearance of the cell. If the battery caught fire, the test failed.

### Test for lithium precipitation at 3C at 25°C:

The test was carried out at 25°C.
(1) Left the battery standing for 30 min;
(2) Charged at 0.5C to 4.45 V, and charged at the constant current to 0.05C;
(3) Left standing for 5 min;
(4) Discharged at 0.5C to 3 V;
(5) Left standing for 60 min;
(6) Charged at 3C to 4.45 V, and charged at the constant current to 0.05C;
(7) Left standing for 5 min;
(8) Discharged at 1C to 3 V;
(9) Left standing for 5 min;
(10) Repeated 10 times from step 6 to step 9;
(11) Left standing for 120 min;
(12) Charged at 3C to 4.45 V, and charged at the constant current to 0.05C;
(13) Left standing for 5 min; observed whether the lithium-ion battery had lithium precipitation occurred, and classified according to the following standards.

The lithium-ion battery was disassembled to obtain the negative plate. The golden yellow represented the normal region, and the white represented the lithium precipitation region. After pictures were taken with a high-power (more than 20 times) microscope, the different regions were analyzed. If a proportion n of the white region in the total area satisfied 0 < n < 1%, the white region was recorded as "no lithium precipitation"; if the proportion n of the white region in the total area satisfied 1% < n < 10%, the white region was recorded as "slight lithium precipitation"; and if a proportion n of the white region in the total area satisfied 10% < n < 100%, the white region was recorded as "serious lithium precipitation".

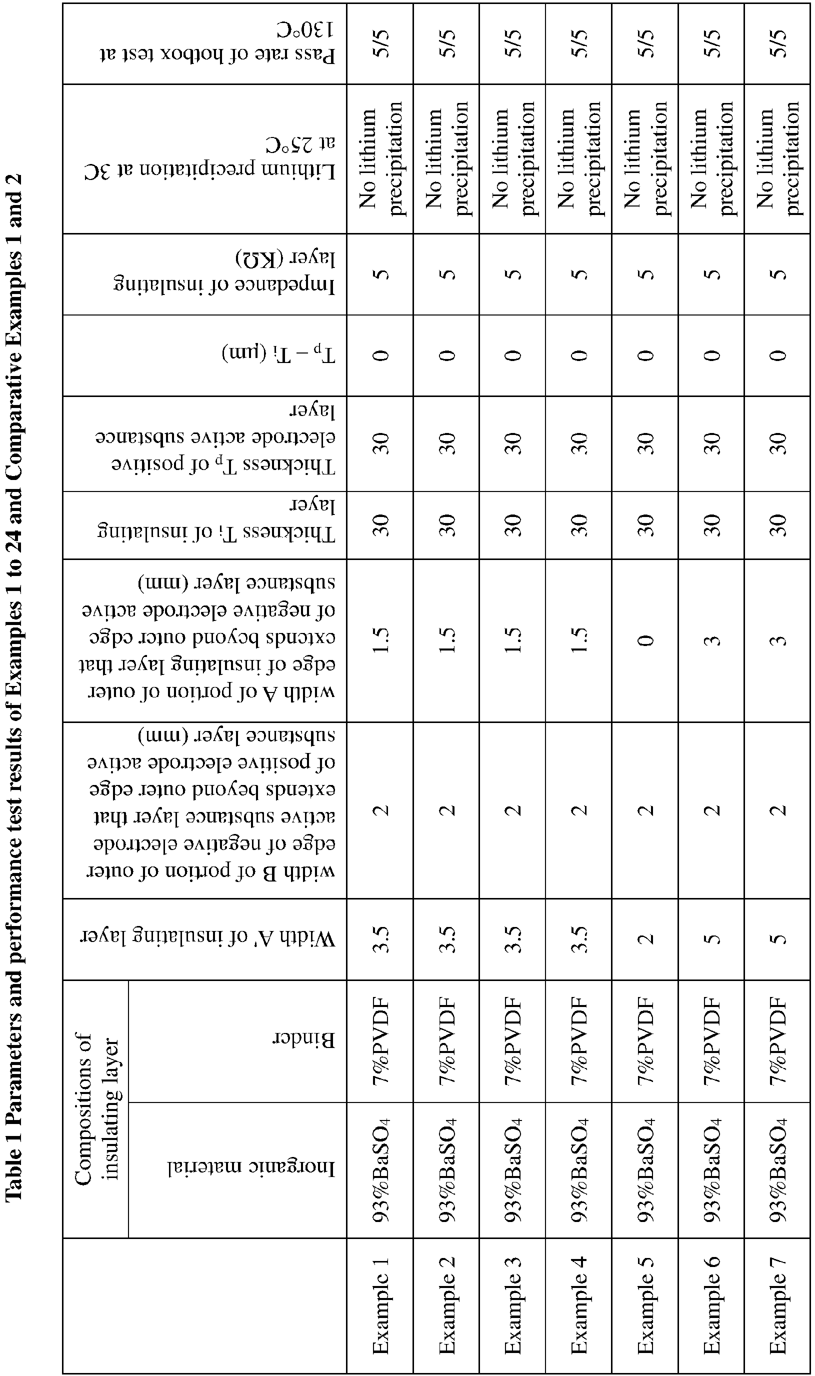

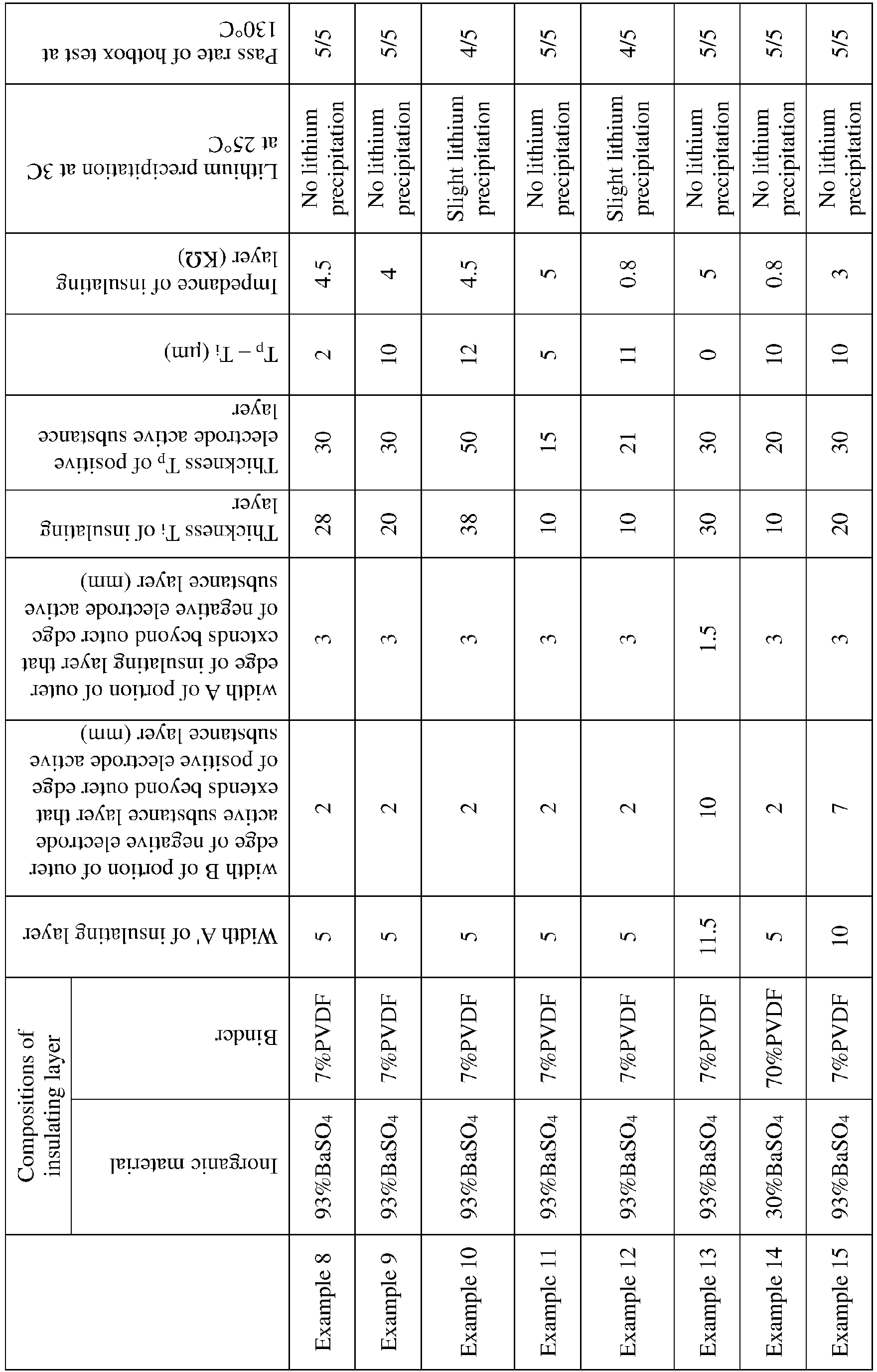

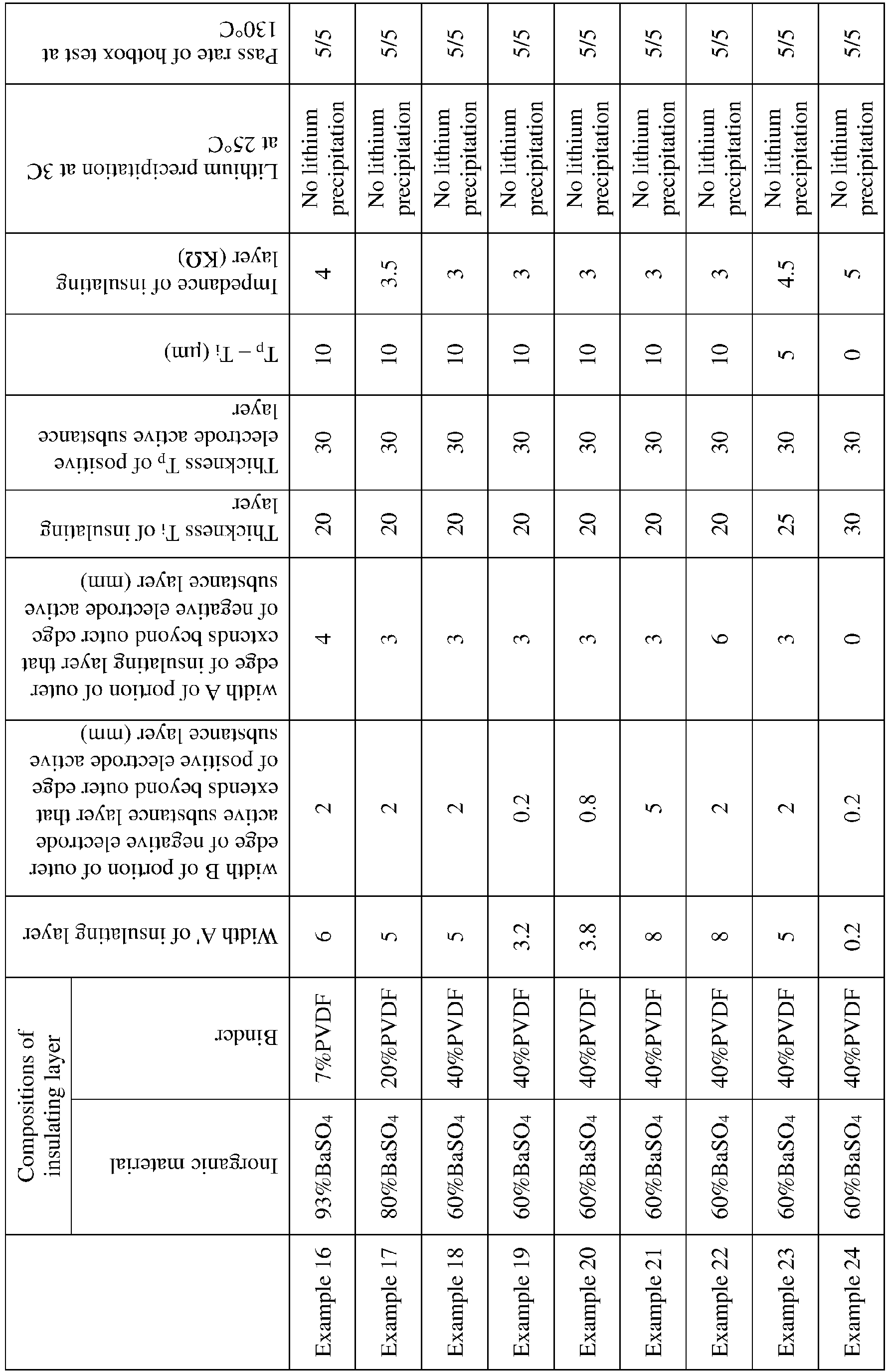

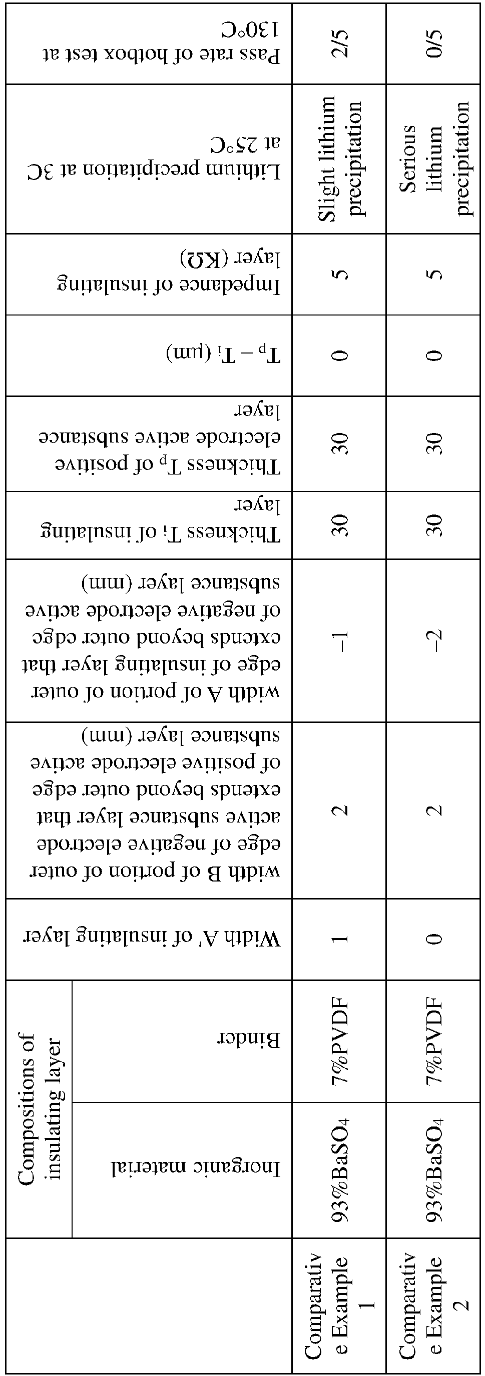

It can be concluded from the analysis of the data in Table 1 that when the outer edge of the negative electrode active substance layer extends further outward than the outer edge of the positive electrode active substance layer at an opposite position, the insulating layer is disposed on a side of the positive electrode current collector close to the tab portion, the inner edge of the insulating layer is made to be in contact with or partially overlap with the outer edge of the positive electrode active substance layer, and the outer edge of the insulating layer is made to be flush with or further outward than the outer edge of the negative electrode active substance layer. In this way, lithium precipitation at the negative electrode of the lithium-ion battery can be alleviated and the pass rate of the hotbox test can be increased. In Comparative Examples 1 and 2, although the insulating layer is disposed on the side of the positive electrode current collector close to the tab portion, after the cell is manufactured, the outer edge of the negative electrode active substance layer extends further outward than the outer edge of the insulating layer. Therefore, the insulating layer cannot provide support to the edge region of the negative electrode active substance layer, lithium precipitation is prone to occur at the negative electrode, and the pass rate of the hotbox test is relatively low.

The thickness of the insulating layer affects the alleviation of lithium precipitation at the negative electrode and the improvement effect of the pass rate of the hotbox test for the lithium-ion battery. It can be concluded from the data of Examples 8 to 12 that if the thickness of the insulating layer is too small, the effect of alleviating lithium precipitation at the negative electrode and increasing the pass rate of the hotbox test for the lithium-ion battery becomes poor.

The composition and impedance of the insulating layer affects the improvement effect of the pass rate of the hotbox test for the lithium-ion battery. It can be concluded from the data of Examples 9, and 14 to 21 that if the mass proportion of the inorganic material in the insulating layer is too small, the impedance of the insulating layer is relatively low, the effect of increasing the pass rate of the hotbox test for the lithium-ion battery becomes poor.

The foregoing detailed descriptions describe a plurality of example embodiments. However, this specification is not intended to limit the explicitly disclosed combinations. Therefore, unless otherwise stated, various features disclosed herein may be combined together to form a plurality of other combinations that are not shown for simplicity purposes.

## Claims

1. An electrochemical apparatus, comprising:
a negative electrode, wherein the negative electrode comprises a negative electrode current collector, and a negative electrode active substance layer is provided on at least one surface of the negative electrode current collector;
a positive electrode, wherein the positive electrode comprises a positive electrode current collector, a positive electrode active substance layer disposed on at least one surface of the positive electrode current collector, and an insulating layer disposed on a surface of the positive electrode current collector close to a tab portion; and
a separator, wherein the separator is disposed between the negative electrode and the positive electrode, and the positive electrode active substance layer and the negative electrode active substance layer face each other across the separator;
wherein,
an outer edge of the negative electrode active substance layer extends further outward than an outer edge of the positive electrode active substance layer at an opposite position; and
an inner edge of the insulating layer is in contact with or partially overlaps with the outer edge of the positive electrode active substance layer; and an outer edge of the insulating layer is flush with the outer edge of the negative electrode active substance layer or extends further outward than the outer edge of the negative electrode active substance layer.

2. The electrochemical apparatus according to claim 1, wherein
the insulating layer is provided on a surface of the positive electrode current collector far away from the tab portion.

3. The electrochemical apparatus according to claim 1 or 2, wherein
a width A of a portion of the outer edge of the insulating layer that extends beyond the outer edge of the negative electrode active substance layer satisfies A ≤ 3 mm.

4. The electrochemical apparatus according to claim 1 or 2, wherein
a width A' of the insulating layer satisfies 0.2 mm ≤ A' ≤ 10 mm.

5. The electrochemical apparatus according to claim 1 or 2, wherein
a width B of a portion of the outer edge of the negative electrode active substance layer that extends beyond the outer edge of the positive electrode active substance layer satisfies 0.2 mm ≤ B ≤ 5 mm.

6. The electrochemical apparatus according to claim 1 or 2, wherein
a thickness Tᵢ of the insulating layer and a thickness Tₚ of the positive electrode active substance layer satisfy 0 µm ≤ Tₚ - Tᵢ ≤ 10 µm.

7. The electrochemical apparatus according to claim 1 or 2, wherein
a thickness Tᵢ of the insulating layer satisfies 10 µm ≤ Tᵢ ≤ Tₚ.

8. The electrochemical apparatus according to claim 1 or 2, wherein the insulating layer comprises an inorganic material and a binder; wherein
the inorganic material comprises at least one of barium sulfate, calcium silicate, aluminum oxide, boehmite, magnesium hydroxide, aluminum hydroxide, silicon dioxide, magnesium oxide, or calcium orthosilicate; and the binder comprises at least one of polyvinylidene fluoride, polyurethane, polyacrylate, styrene-butadiene rubber, polyetherimide, carboxymethyl cellulose sodium, or acrylate.

9. The electrochemical apparatus according to claim 8, wherein
based on a total weight of the insulating layer, a weight percentage of the inorganic material ranges from 60% to 93%, and a weight percentage of the binder ranges from 7% to 40%.

10. The electrochemical apparatus according to claim 1 or 2, wherein
an impedance of the insulating layer is greater than or equal to 1 KΩ.

11. An electronic apparatus, comprising the electrochemical apparatus according to any one of claims 1 to 10.
